# EUROPEAN PATENT SPECIFICATION

(11) **EP 4 075 725 B1**
(45) Date of publication and mention of the grant of the patent: **05.11.2025**
(21) Application number: 22167779.2
(22) Date of filing: 12.04.2022
(51) Int. Cl.: H04L 9/40, H04L 9/32, H04L 9/08, G06F 21/35

(54) **TWO-FACTOR AUTHENTICATION TO AUTHENTICATE USERS IN UNCONNECTED DEVICES**
ZWEIFAKTOR-AUTHENTIFIZIERUNG ZUR AUTHENTIFIZIERUNG VON BENUTZERN IN UNVERBUNDENEN VORRICHTUNGEN
AUTHENTIFICATION À DEUX FACTEURS POUR AUTHENTIFIER LES UTILISATEURS SUR DES DISPOSITIFS NON CONNECTÉS

(30) Priority: 13.04.2021 US 202163174269 P; 04.02.2022 US 202217665384
(43) Date of publication of application: 19.10.2022
(73) Proprietor: Biosense Webster (Israel) Ltd, Yokneam, 2066717 (IL)
(72) Inventor: RAVUNA, Eliyahu, Yokneam 2066717 (IL); AM-SHALEM, Shlomo, Yokneam 2066717 (IL); COHEN, Schmuel, Yokneam 2066717 (IL); NGUYEN, Hue, Irvine, 92618 (US); YAACOBOVICH, Or, Yokneam 2066717 (IL)
(74) Representative: Carpmaels & Ransford LLP

(56) References cited:
- US-A1- 2007 234 042
- US-A1- 2010 186 075
- US-A1- 2016 241 403

## Description

### FIELD OF THE DISCLOSURE

The present disclosure relates to computing devices, and in particular, but not exclusively to, user authentication.

### BACKGROUND

Technicians may visit different sites, such as medical centers, to perform maintenance tasks on local devices, e.g., medical systems such as CARTO^{®} 3 System of Biosense Webster Inc., Irvine, CA. The local devices may not be connected to the Internet, and this poses a challenge to give technicians access to the local devices and keep track of which technicians have logged into which local devices.

US Patent 8,046,587 to Gantman, et al., describes a method for granting authenticated access to off-line, limited-resource mobile devices. A public-private key pair is generated by a service provider and the public key is used to digitally sign a username and (possibly) access privileges to obtain a password for technician. The public key is securely distributed to mobile devices. When off-line, a mobile device may authenticate access to restricted functions of the mobile device by a technician. The technician provides its username, access privileges and password to the mobile device. The mobile device then uses the public key, username and access privileges to verify the password. To invalidate an old username and password, the service provider replaces the public-private key pair with a new public-private key pair.

PCT Publication WO2013123453 of Bartucci, et al., describes a portable electronic memory device (e.g., USB flash drive). Exemplary modes include portable electronic memory devices having a keypad, encryption hardware, and the ability to encrypt, decrypt, or serve as an authentication tool for a remote computing system without requiring special drivers to be installed on the receiving system.

US Patent 9,118,662 to Corrion describes a method and a system for extending distributed logon services to an off-line computing device includes encrypting, on the off-line computing device, a one-time password (OTP), a nonce, and a unique identifier to generate an authorization request message. Using a mobile device as a proxy to forward the authorization request message to an access control server for authorization. Decrypting the authorization response message to obtain the nonce. Re-encrypting the nonce to generate an authorization response message. Using the mobile device as a proxy to forward the authorization response message to the off-line computing device. Decrypting the authorization response message to obtain the nonce. Comparing the nonce obtained from the authorization response message with the original nonce. The computing device to permit or deny access as result of comparing the nonce obtained from the authorization response message with the original nonce.

US Patent 10,326,733 to Bokare, et al., describes a computerimplemented method for facilitating single sign-on for multiple devices may include (1) establishing a login session for a user account, (2) in response to establishing the login session, providing, to a device associated with the user account, a session token for the user account, (3) receiving, from at least one client, a request to access resources associated with the user account, (4) determining that the associated device possesses the session token for the user account, and (5) in response to determining that the associated device possesses the session token, providing, to the client, access to the resources associated with the user account.

US Patent Publication 2015/0220917 of Aabve, et al., describes methods, devices, and systems for verifying tokens using limited-use certificates. For example, a user device can send a token request to a token provider computer, and receive in response a token and a token certificate associated with the token. The token certificate may include, for example, a hash of the token and a digital signature by the token provider computer or another trusted entity. The user device can provide the token and the token certificate to an access device. The access device can verify the token using the token certificate, and verify the token certificate using a digital signature. In some cases, the token and token certificate may be verified offline. The access device can then conduct a transaction using the token.

US Patent 8,321,953 to Jevans describes a system to authorize access to secured data storage comprising a user interface configured to receive a user code offline from a user to allow access to stored data, circuitry configured to authorize access to the stored data based, at least in part, on the user code and provide access to the stored data, and a storage system configured to store the stored data.

Security Assertion Markup Language (SAML) is an open standard for exchanging authentication and authorization data between parties, in particular, between an identity provider and a service provider. SAML is described in more detail at en.wikipedia.org/wiki/Security_Assertion_Markup_Language.

US Patent Publication 2010/186075 of Hohlbaum, et al., attempts to provide a secure and trustable way of accessing devices in an embedded device environment with no network connectivity to outside service. This type of access to access-critical embedded devices by a user or service technician is controlled by way of a mobile memory or access-ticket storage i.e., such as a physical token. The token can, for example, be a smartcard or USB stick with appropriate memory for storing a user credential(s) or user identification such as a password or fingerprint. In an exemplary aspect, a user can acquire an electronic access ticket with a suitable expiration period from a centralized ticket or access authorization server before travelling to the access-critical device, or to a location communicatively connected to the latter. The access ticket can contain access rights of the user with respect to one or several access-critical devices, and can be stored on the mobile memory. The access rights can be evaluated by the access-critical devices upon authentication of the identity of the user, based on the user credential(s), by an authenticating device to which the mobile memory can be coupled.

US Patent Publication 2016/241403 of Lindemann describes a system, apparatus, method, and machine readable medium for authenticating a client to a device. For example, one aspect of a method comprises: registering an authenticator of a client with a relying party, the registration allowing a user of the client to remotely authenticate the user to the relying party over a network; generating a first authentication structure using at least a first authentication key associated with the authenticator and a signature generated with a first verification key; caching the first authentication structure on the client; providing a second verification key corresponding to the first verification key to a transaction device; performing an authentication transaction between the client and the transaction device in which the client generates a second authentication structure using a second authentication key associated with the first authentication key, the transaction device uses the second verification key to validate the signature on the first authentication structure and uses the first authentication key to validate the second authentication structure.

### SUMMARY OF THE INVENTION

The invention is as defined in the independent claims.

### BRIEF DESCRIPTION OF THE DRAWINGS

The present disclosure will be understood from the following detailed description, taken in conjunction with the drawings in which:
Fig. 1 is a partly pictorial, partly block diagram view of a two-factor authorization system constructed and operative in accordance with an exemplary mode of the present disclosure;
Fig. 2 is a flowchart including steps in a method of generating an authentication file for use in the system of Fig. 1;
Fig. 3 is a schematic view of a user interface screen used by a user to generate the authentication file in the system of Fig. 1;
Fig. 4 is a schematic view of a mobile storage device with the authentication file stored therein for use with the system of Fig. 1;
Fig. 5 is a flowchart including steps in a method of verifying the authentication file to provide access to a computing resource in the system of Fig. 1;
Fig. 6 is a schematic view of a user interface screen used by a user to login to a computing resource in the system of Fig. 1;
Fig. 7 is a flowchart including steps in an alternative method of generating an authentication file for use in the system of Fig. 1;
Fig. 8 is a flowchart including steps in an alternative method of verifying the authentication file to provide access to a computing resource in the system of Fig. 1;
Fig. 9 is a schematic view of the mobile storage device of Fig. 4 with the authentication file with more data stored therein for use with the system of Fig. 1; and
Fig. 10 is a flowchart including steps in an alternative method of verifying the authentication file to provide access to a computing resource and replace a user revocation list and/or public key list in the system of Fig. 1.

### DESCRIPTION OF EXEMPLARY MODES

### OVERVIEW

As previously mentioned, technicians may visit different sites, such as medical centers, to perform maintenance tasks on local devices, e.g., medical systems such as CARTO^{®} 3 System of Biosense Webster Inc., Irvine, CA.

The local devices may not be connected to the Internet or via any suitable network and this poses a challenge to give technicians access to the local devices and keep track of which technicians have logged into which local devices.

One solution is to use the same hardcoded password for all technicians on all local devices. This however provides low level security and does not uniquely identify the individual technicians. Also, when a technician is no longer employed to maintain the local devices, the technician we still be able to access the local devices.

Exemplary modes of the present disclosure solve the above problems by using two-factor authentication and a mobile (e.g., portable) storage device to store an authentication file to authenticate individual users (e.g., technicians) for use of computing resources at different unconnected processing devices.

A technician receives an authentication file from an online authorization application (e.g., a web application). The authentication file is then stored in a mobile storage device such as a flash disk, CD, DVD or SD card. The authentication file allows the technician to access computing resources of the different unconnected processing devices. The technician then takes the mobile storage device to one of the unconnected processing devices and is provided access to that processing device responsively to verifying the authentication file stored in the mobile storage device. The process of providing the authentication file and using the authentication file is now described in more detail.

A technician logs in to an online authorization application running on a server (e.g., a web application hosted by a web server) or any suitable application which may be accessed from multiple locations within a network (e.g., the Internet or an intranet). The login to the online application may include the technician supplying a username and password which are authenticated by the application. After the username and password are authenticated, the authorization application prompts the technician to enter a personal identification code (PIC), which may include numbers and/or letters and/or symbols. The PIC is typically chosen by the technician. Alternatively, the PIC could be provided by the authorization application. The authorization application generates an expiration value (e.g., an expiration date) which may be any suitable value. For example, the expiration value may be for a given number of hours, days, weeks or months after a current time/date. The authorization application generates a digital signature of login details including the expiration value and the username. The login details may also include one or more access rights that determine the functionality that the technician is allowed to access, for example permissions, access level or type of user. The digital signature is typically generated using asymmetric encryption using a private key (e.g., based on a certificate including the private key) of an authorization body such as the technician's employer. The authorization application then encrypts the digital signature, expiration value and the username (e.g., using symmetric encryption using a key based on the PIC). The digital signature, expiration value and the username may be encrypted as a single encrypted item or as separate encrypted items. The authorization application then stores the encrypted digital signature, expiration value and username (e.g., the encrypted authentication file) in an authentication file in the mobile storage device of the technician. In some exemplary modes, the expiration value may be left in the clear (i.e., not encrypted) and stored in the clear in the mobile storage device.

Once the authentication file or relevant values are stored in the mobile storage device, the technician may take the mobile storage device to any of the unconnected processing devices. At one of the selected unconnected processing devices the technician enters the PIC in a user interface screen rendered by an authentication application running on that processing device and the technician requests opening of the authentication file stored in the mobile storage device. The authentication application receives the authentication file, and decrypts the authentication file (e.g., using symmetric decryption responsively to a key based on the PIC). The authentication application then verifies the digital signature responsively to the username and expiration value stored in the authentication file. The digital signature is typically verified using asymmetric encryption using a public key (e.g., based on a certificate including the public key) of an authorization body such as the technician's employer. The expiration value is checked to ensure that it has not expired. Optionally, the access right(s) (e.g., permissions, access level or type of user) included in the login details is/are checked to verify whether the technician is authorized to access requested functionality or to allow and/or disallow functionality based on the verified access right(s). The authentication application provides the technician access to a computing resource logged in under the username responsively to authenticating the digital signature and the expiration value.

In the above manner, the technician may be provided with time/date limited access to the computing resources at the different unconnected processing devices. The access is secured using the digital signature and the PIC thereby providing two-factor security, which restricts use of the computing resources to individual technicians (based on the PIC) and identifies each technician logged into the computing resources (based on the username).

In some exemplary modes, the authorization application generates the authentication file to include a signature of the expiration value, username and PIC. In these exemplary modes, the expiration value may be stored in the clear in the mobile storage device and the PIC is generally not used to form an encryption key. In these exemplary modes, at one of the unconnected processing devices, the technician is prompted to enter the PIC and username (if the username is not stored in the mobile storage device). Then, the authentication application verifies the digital signature (thereby authenticating the username, expiration date and PIC), and checks the expiration value. The authentication application provides the technician access to a computing resource logged in under the username responsively to authenticating the digital signature and the expiration value.

In some exemplary modes, the authentication file may also include a user revocation list. The user revocation list may list users of revoked but non-expired authentication files or the revoked but non-expired authentication files. For example, technicians such as Eve and Mallory have left their job, but their authentication files on their mobile storage devices are still valid for another few weeks. Therefore, Eve and Mallory could illegitimately access the computing resources using their respective mobile storage devices. If Alice, a current employed technician requests a new authentication file during this time period, a user revocation list listing both Eve and Mallory (e.g., their emails, usernames, and/or other identification details such as details of the authentication files that were generated for them) may be added to the new authentication file so that when Alice logs in to different devices the user revocation list may be copied to the respective devices so that when Eve and Mallory try to log in to those devices Eve and Mallory will be blocked based on that user revocation list. Therefore, the process of requesting an authentication file and logging in to a device based on the authentication file, results in the user revocation list being copied to the device which is being logged in to. The user revocation list is included in the authentication file, and the digital signature also signs the user revocation list so that the authenticity of the user revocation list may be checked when the user logs in to a device.

In some exemplary modes, the user revocation list may include a version identification (ID) (e.g., version number and/or date). The version **ID** may be used by the device authenticating the list to determine whether a previously stored user revocation list should be replaced by this user revocation list included in the authentication file of the current user logging in to the device. For example, when Alice logs into a medical device, the medical device checks whether the version **ID** (e.g., date) of the user revocation list included in Alice's authentication file is newer than the version **ID** of the user revocation list stored in the memory of the medical device. If it is indeed newer, the medical device will replace its stored user revocation list with the list found in Alice's authentication file.

Although each computing resource at the different unconnected processing devices is loaded with at least one public key for verifying signatures etc., the public key may expire, or the private-public key pair may become compromised. Therefore, it is important to generate one or more spare private-public key pairs, and load at least one spare public key on the devices. However, this is problematic as the devices may not be connected over a network. It should be noted that the new private key cannot be used until its public key counterpart is distributed to all devices in the field. To ease the transition, the authentication file may be used to distribute the spare public key(s) as described in more detail below.

Therefore, in some exemplary modes, the authentication file may also include at least one spare public key. For example, if Alice, a current employed technician requests a new authentication file, one or more spare public keys may be added to the new authentication file so that when Alice logs in to different devices, the spare public key(s) may be copied to the respective devices for later use. Therefore, the process of requesting an authentication file and logging in to a device based on the authentication file, results in the spare public key(s) being copied to that device. The spare public key(s) may be included in the authentication file, and the digital signature also signs the spare public key(s) so that the authenticity of the spare public key(s) may be checked when the user logs in to a device.

In some exemplary modes, the spare public key(s) may be stored in a public key list in the authentication file. The public key list may also include the public key currently used by the system. The public key list may include a version identification (ID) (e.g., version number and/or date). The version ID may be used by the device to determine whether a previously stored public key list should be replaced by the public key list included in the authentication file of the current user logging in to the device. For example, when Alice logs into a medical device, the medical device checks whether the version ID (e.g., date) of the public key list included in Alice's authentication file is newer than the version ID of the public key list stored in the memory of the medical device. If it is indeed newer, the medical device will replace its stored public key list with the list found in Alice's authentication file. The public keys in the new public key list may then be used by the device to check digital signatures presented to the device.

Once all unconnected devices learn the new public key(s), new authentication files may be signed with the private key of the new public key. From then on, the public key list stored in the authentication file does not need to include the old public key, and eventually, all the unconnected devices will forget the old public key as the public key list is replaced in those devices.

The present disclosure uses the term "technician" by way of example only. The term "technician" is to be understood as describing the actions of any suitable user and not just someone acting as a technician.

### SYSTEM DESCRIPTION

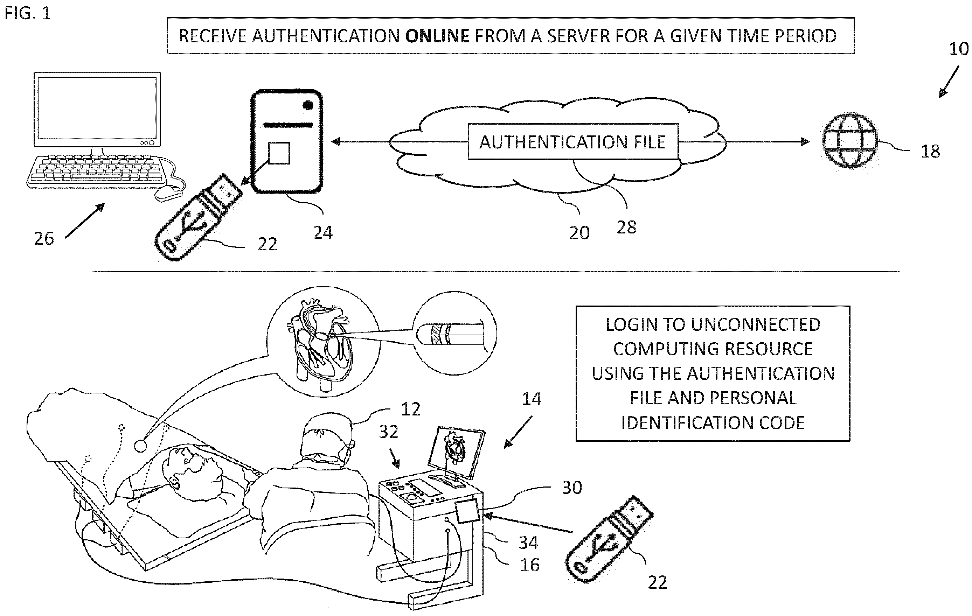

Reference is now made to Fig. 1, which is a partly pictorial, partly block diagram view of a two-factor authorization system 10 constructed and operative in accordance with an exemplary mode of the present disclosure.

The two-factor authorization system 10 is configured to authenticate a technician 12 or any suitable user to use unconnected computing resources 14 (only one shown for the sake of simplicity) of different unconnected processing devices 16 (only one shown for the sake of simplicity).

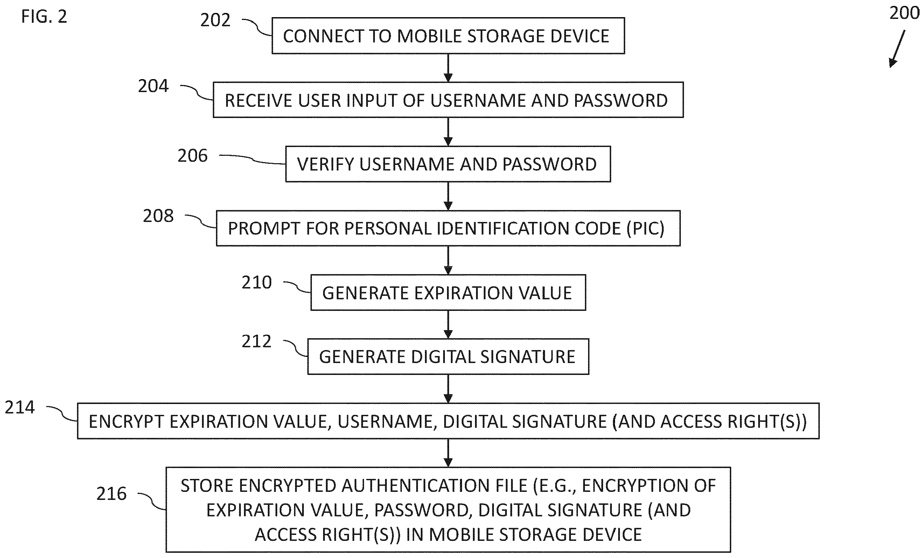

The two-factor authorization system 10 includes an online authorization application (e.g., a web application) running on a server 18 (e.g., web server) over any suitable network 20 (e.g., the Internet). The technician 12 connects a mobile storage device 22 (e.g., flash disk, CD, DVD or SD card) to a computing device 24 (e.g., personal computer, laptop computer, mobile phone or tablet computing device), which is connected to the server 18 over the network 20. The technician 12 enters a username, password, and personal identification code (PIC) via a user input device 26 (e.g., keyboard and/or mouse, or touch screen). The authorization application processes the username, password, and PIC and provides an authentication file 28 for storing in the mobile storage device 22, as described in more detail with reference to Figs. 2-4. In a similar manner, other technicians may receive personalized authorization files.

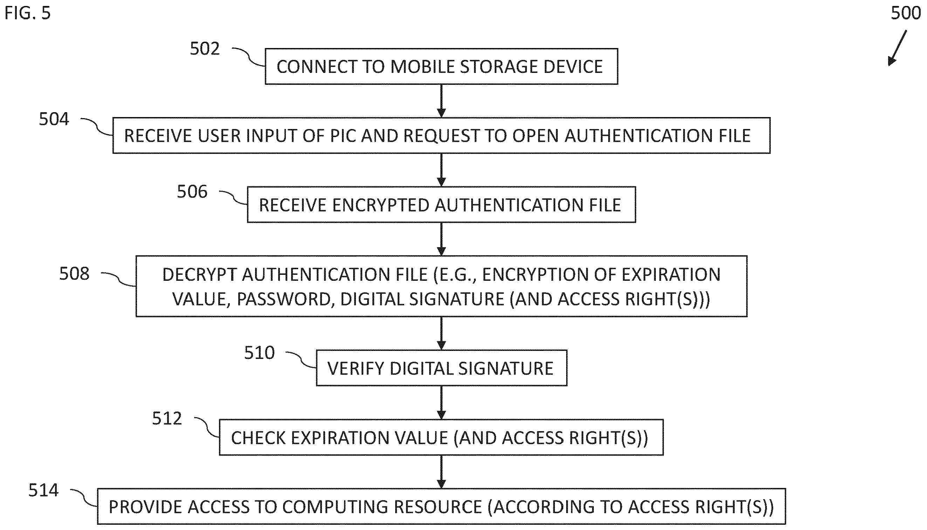

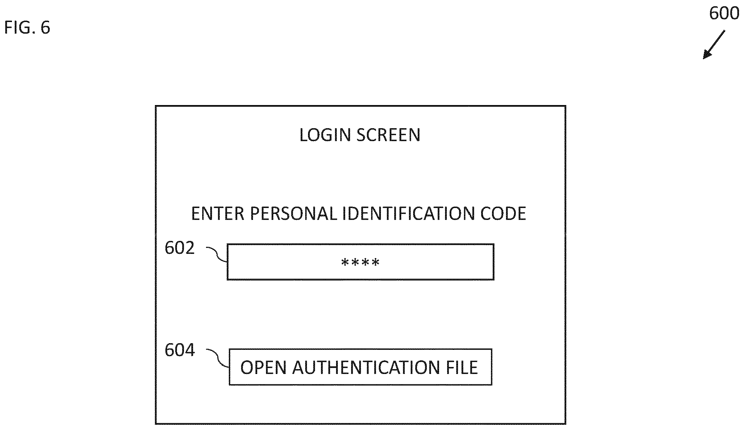

The two-factor authorization system 10 also includes authentication applications running on respective ones of the unconnected processing devices 16 to authenticate the authorization files as described in more detail with reference to Figs. 5 and 6. Each processing device 16 may include a data interface 30 configured to connect to the mobile storage device 22 (which stores login details (e.g., an expiration value, the username and optionally one or more access rights, for example permissions, access level or type of user.) and a digital signature of the login details typically in encrypted form). Each processing device 16 may include a user input device 32 and processing circuitry 34.

In practice, some or all of the functions of the computing device 24 and the processing circuitry 34 may be combined in a single physical component or, alternatively, implemented using multiple physical components. These physical components may comprise hard-wired or programmable devices, or a combination of the two. In some exemplary modes, at least some of the functions of the computing device 24 and the processing circuitry 34 may be carried out by a programmable processor under the control of suitable software. This software may be downloaded to a device in electronic form, over a network, for example. Alternatively, or additionally, the software may be stored in tangible, non-transitory computer-readable storage media, such as optical, magnetic, or electronic memory.

Reference is now made to Fig. 2, which is a flowchart 200 including steps in a method of generating the authentication file 28 for use in the system 10 of Fig. 1. Reference is also made to Fig. 1.

The technician 12 operationally connects the mobile storage device 22 with the computing device 24. For example, the technician 12 inserts the mobile storage device 22 into a data interface of the computing device 24. The authorization application running on the server 18 is configured to connect (block 202) to the mobile storage device 22.

The authorization application running on the server 18 is configured to receive (block 204) user input of a username of the technician 12, and a password associated with that username. The authorization application running on the server 18 is configured to verify (block 206) the username and password. If the username and password are authenticated, the authorization application running on the server 18 is configured to prompt (block 208) for a personal identification code (PIC), which is typically chosen by the technician 12. In some exemplary modes, the PIC may be generated by the authorization application. The server 18 is configured to receive the entered PIC.

The authorization application running on the server 18 is configured to generate (block 210) an expiration value (e.g., an expiration date), which may be any suitable value. For example, the expiration value may be for a given number of hours, days, weeks or months after the current time/date.

The authorization application running on the server 18 is configured to generate (block 212) a digital signature of login details including the username and expiration value and optionally the access right(s). **In** some exemplary modes, the authorization application running on the server 18 is configured to generate the digital signature responsively to a private key of a public key infrastructure (e.g., based on a certificate including the private key) of an authorization body such as the technician's employer.

The authorization application running on the server 18 is configured to encrypt (block 214) (e.g., using symmetric encryption) the expiration value and/or the username and/or the digital signature and/or the access right(s) responsively to a key based on the **PIC. In** some exemplary modes, the expiration value, username, digital signature and optionally the access right(s) are encrypted as a single item. **In** some exemplary modes, the expiration value, username, digital signature, and optionally the access right(s) are encrypted individually or in any suitable combination thereof. The encrypted expiration value, username, digital signature, and optionally the access right(s) are stored in the authentication file 28.

The authorization application running on the server 18 is configured to store (block 216) the authentication file 28 (including encrypted expiration value, password, the digital signature of the login details and optionally the access right(s)) in the mobile storage device 22 responsively to authenticating the password. **In** some exemplary modes, the authorization application running on the server 18 is configured to provide the authentication file 28 to a browser running on the computing device 24 so that the technician 12 may select to store the authentication file 28 in the mobile storage device 22.

In some exemplary modes, the expiration value, and/or username, and/or digital signature may be stored in the clear in the authentication file 28 in the mobile storage device 22.

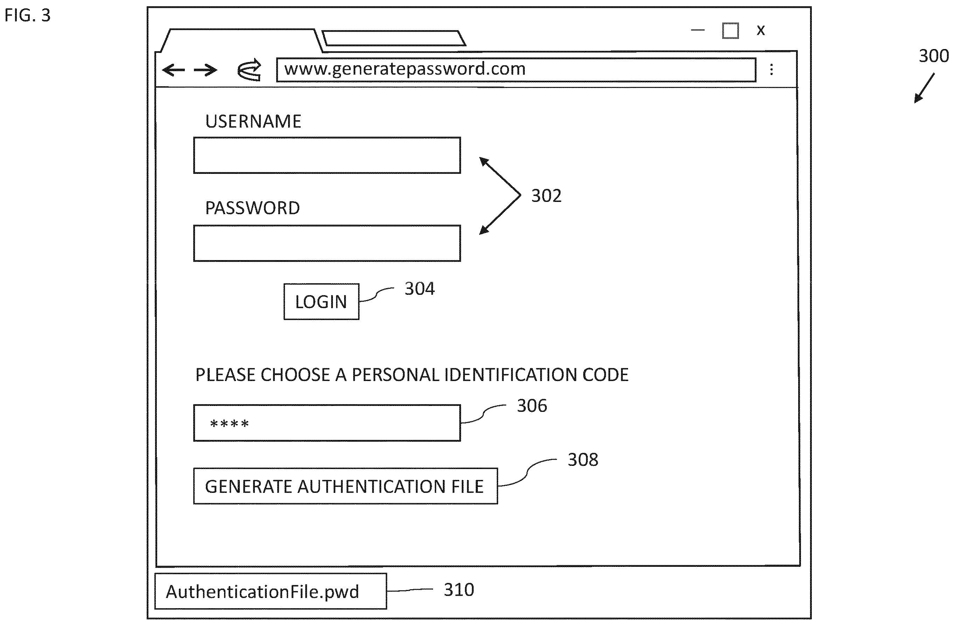

Reference is now made to Fig. 3, which is a schematic view of a user interface screen 300 used by the technician 12 to generate the authentication file 28 in the system 10 of Fig. 1. The user interface screen 300 includes fields 302 for inputting the username and password, and a button 304 to request login to the server 18. The user interface screen 300 includes a field 306 to allow input of the PIC, and a button 308 to request generation of the authentication file 28 as described in Fig. 2. A link 310 to the downloaded authentication file 28 is shown at the bottom of the user interface screen 300, which allows the technician 12 to store the authentication file 28 in the mobile storage device 22.

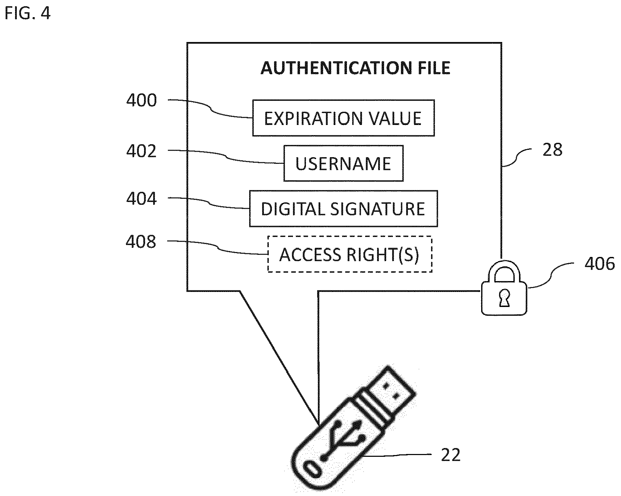

Reference is now made to Fig. 4, which is a schematic view of the mobile storage device 22 with the authentication file 28 stored therein for use with the system 10 of Fig. 1. As shown the authentication file 28 includes the expiration value (block 400), the username (block 402), the digital signature (block 404), and optionally the access right(s) (block 408) secured (block 406) by a suitable encryption algorithm using a key based on the PIC.

Reference is now made to Fig. 5, which is a flowchart 500 including steps in a method of verifying the authentication file to provide access to the computing resource 14 in the system 10 of Fig. 1. Reference is also made to Fig. 1.

Once the authentication file 28 or relevant values are stored in the mobile storage device 22, the technician 12 may take the mobile storage device 22 to any of the unconnected processing devices 16. At one of the selected unconnected processing devices 16 the technician 12 operationally connects the mobile storage device 22 with the data interface 30 of the processing device 16. For example, the technician 12 inserts the mobile storage device 22 into the data interface 30 of the processing device 16. The authentication application running on the processing circuitry 34 is configured to connect (block 502) to the mobile storage device 22.

Reference is now made to Fig. 6, which is a schematic view of a user interface screen 600 used by the technician 12 to login to the computing resource 14 in the system 10 of Fig. 1. The authentication application running on the processing circuitry 34 is configured to present the user interface screen 600 on a display device including a field 602 in which the technician 12 enters the PIC and a button 604 to request opening of the authentication file 28 stored in the mobile storage device 22. The technician 12 enters the PIC in the user interface screen 600 and requests opening of the authentication file 28 stored in the mobile storage device 22.

Reference is again made to Figs. 1 and 5. The authentication application running on the processing circuitry 34 is configured to receive (block 504) user input of the PIC and the request to open the authentication file 28 via the user input device 32. The authentication application running on the processing circuitry 34 is configured to receive (block 506) the encrypted authentication file 28 including the digital signature, the expiration value, the username, and optionally the access right(s) (in encrypted format) from the mobile storage device 22. In some exemplary modes, the authentication application running on the processing circuitry 34 is configured to symmetrically decrypt (block 508) any one or more of the following included in the authentication file 28: the expiration value; the username; the digital signature; and optionally the access right(s) responsively to a key based on the received personal identification code.

The authentication application running on the processing circuitry 34 is configured to verify (block 510) the digital signature responsively to the expiration value, the username, and optionally the access right(s), to authenticate the expiration value, the username, and optionally the access right(s). In some exemplary modes, the processing circuitry 34 is configured to verify the digital signature responsively to a public key of a public key infrastructure.

The authentication application running on the processing circuitry 34 is configured to check (block 512) that the expiration value has not expired. Optionally the processing circuitry 34 is configured to check the access right(s) (e.g., permissions, access level or type of user) included in the login details to verify whether the technician is authorized to access requested functionality or to allow and/or disallow functionality based on the verified access right(s). The authentication application running on the processing circuitry 34 is configured to provide access (block 514) to the computing resource 14 (optionally according to the verified access right(s) and) logged in under the username responsively to the expiration value and the username being authenticated (with the digital signature) and the expiration value having not expired. The authentication of the digital signature is in turn dependent upon the correct personal identification code being entered by the technician 12 and being used to decrypt the authentication file 28 as described above.

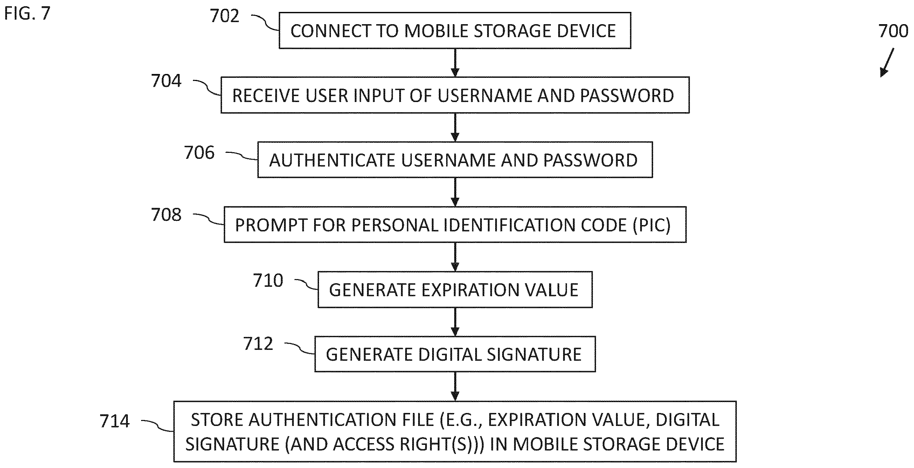

Reference is now made to Fig. 7, which is a flowchart 700 including steps in an alternative method of generating an authentication file for use in the system 10 of Fig. 1. The steps of blocks 702-710 substantially correspond to the steps of blocks 202-210 described above with reference to Fig. 2. The authorization application running on the server 18 is configured to generate (block 712) the digital signature of the login details including the entered personal identification code, the username, the generated expiration value, and optionally the access right(s). The authorization application running on the server 18 is configured to store (block 714) the digital signature (typically in the clear), the expiration file (typically in the clear), and the access right(s) (typically in the clear) as an authentication file in the mobile storage device 22.

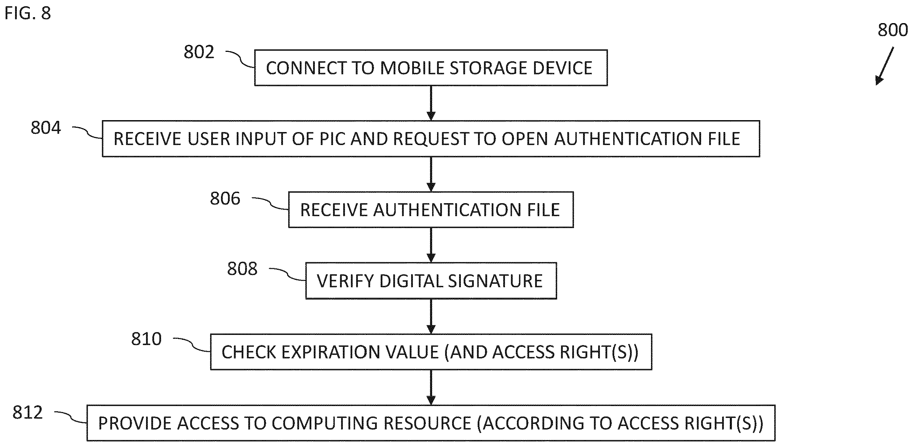

Reference is now made to Fig. 8, which is a flowchart 800 including steps in an alternative method of verifying the authentication file to provide access to the computing resource 14 in the system 10 of Fig. 1. The steps of blocks 802-806 substantially correspond to the steps of blocks 502-506 described above with reference to Fig. 5.

The authentication application running on the processing circuitry 34 is configured to verify (block 808) the digital signature responsively to the expiration value (stored in the authentication file in the mobile storage device 22), the username (which is optionally entered by the technician 12 at the step of block 804), the PIC (entered at the step of block 804), and optionally the access right(s), to authenticate the expiration value, the username, the PIC, and optionally the access right(s). In some exemplary modes, the processing circuitry 34 is configured to verify the digital signature responsively to a public key of a public key infrastructure.

The authentication application running on the processing circuitry 34 is configured to check (block 810) that the expiration value (stored in the authentication file in the mobile storage device 22) has not expired. Optionally the processing circuitry 34 is configured to check the access right(s) (e.g., permissions, access level or type of user) included in the login details to verify whether the technician is authorized to access requested functionality or to allow and/or disallow functionality based on the verified access right(s). The authentication application running on the processing circuitry 34 is configured to provide access (block 812) to the computing resource 14 (optionally according to the verified access right(s) and) logged in under the username responsively to the expiration value, the username, and the PIC being authenticated (with the digital signature) and the expiration value having not expired.

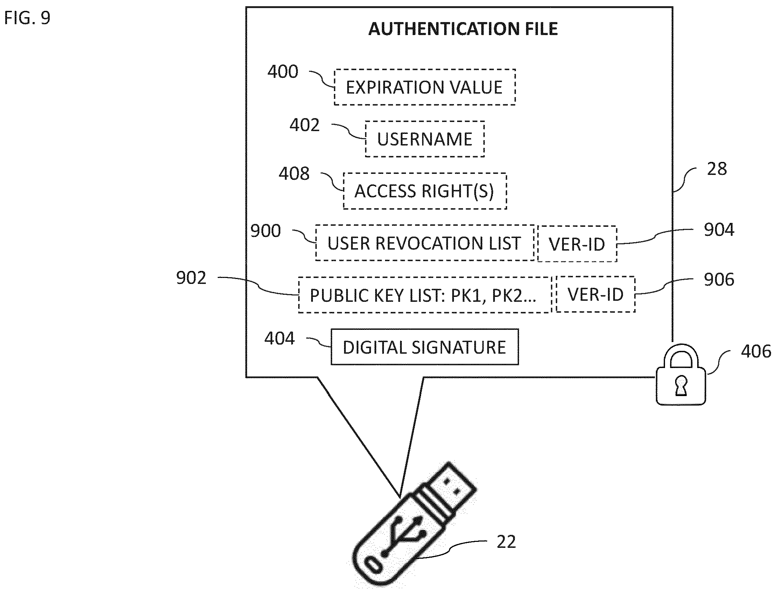

Reference is now made to Fig. 9, which is a schematic view of the mobile storage device 22 of Fig. 4 with the authentication file 28 with more data stored therein for use with system 10 of Fig. 1. The authentication file 28 shown in Fig. 9 may include a user revocation list 900 and/or a public key list 902 among other data.

In some exemplary modes, the authentication file 28 may also include the user revocation list 900 listing users of revoked but non-expired authentication files and/or revoked but non-expired authentication files. For example, technicians such as Eve and Mallory have left their job, but their authentication files 28 on their mobile storage devices 22 are still valid for another few weeks. Therefore, Eve and Mallory could illegitimately access the computing resources 14 using their respective mobile storage devices 22. If Alice, a current employed technician requests a new authentication file during this time period, the user revocation list 900 listing both Eve and Mallory (e.g., their emails, usernames, and/or other identification details such as details of the non-expired authentication files that were generated for them) may be added to the new authentication file 28 so that when Alice logs in to different devices, the user revocation list 900 may be copied to the respective devices so that when Eve and Mallory try to log in to those devices, Eve and Mallory will be blocked based on that user revocation list. Therefore, the process of requesting an authentication file and logging in to a device based on the authentication file, results in the user revocation list 900 being copied to the device. The user revocation list 900 is included in the authentication file 28, and the digital signature (block 404) also digitally signs (e.g., with the current private key) the user revocation list 900 so that the authenticity of the user revocation list 900 may be checked when the user logs in to a device.

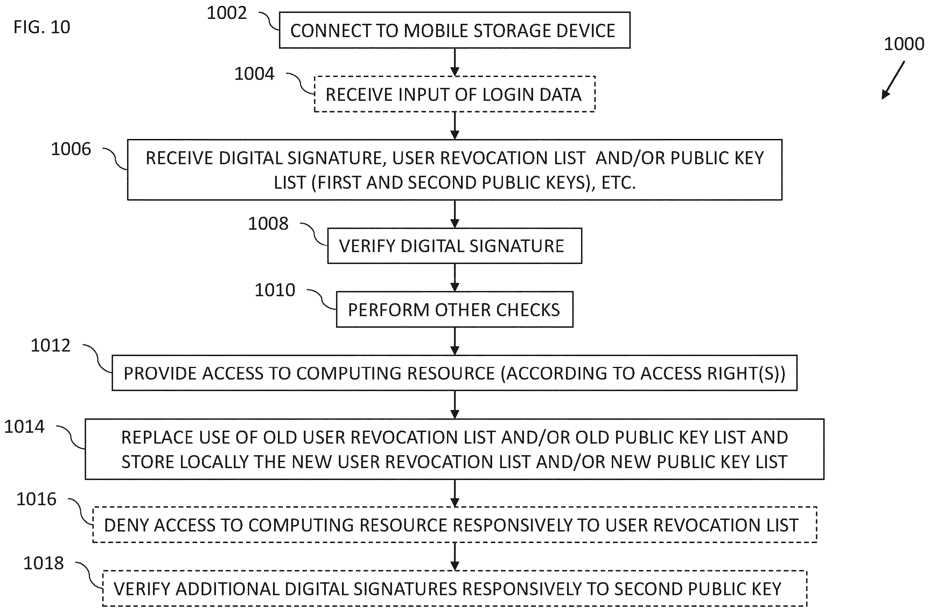

The authentication file 28 may also include a version identification 904 identifying a version of the user revocation list 900. The version identification 904 may include a version number and/or date used to keep track of the latest version of the user revocation list 900, as described in more detail with reference to Fig. 10. For example, when Alice logs into a medical device, the medical device checks whether the version ID 904 (e.g., date) of the user revocation list 900 included in Alice's authentication file 28 is newer than the version ID of the user revocation list stored in the memory of the medical device. If it is indeed newer, the medical device will replace its stored user revocation list with the list found in Alice's authentication file.

The user revocation list 900 may include a list of users who are no longer authorized to connect to devices in the two-factor authorization system 10, for example, technicians who no longer work for a company servicing the computing resources 14. The user revocation list 900 may include a list of users who are no longer authorized to connect to devices in the two-factor authorization system 10 but still have access to non-expired authentication files 28. The user revocation list 900 may include a list of users, usernames, user email address and/or other identifying information such as authentication file 28 assigned to the revoked users.

Although each computing resource at the different unconnected processing devices is loaded with at least one public key for verifying signatures etc., the public key may expire, or the private-public key pair may become compromised. Therefore, it is important to generate one or more spare private-public key pairs, and load at least one spare public key on the devices. However, this is problematic as the devices may not be connected over a network. It should be noted that the new private key cannot be used until its public key counterpart is distributed to all devices in the field. To ease the transition, the authentication file 28 may be used to distribute the spare public key(s) as described in more detail below.

Therefore, in some exemplary modes, the authentication file 28 may also include at least one spare public key. For example, if Alice, a current employed technician requests a new authentication file, one or more spare public keys may be added to the new authentication file 28 so that when Alice logs in to different devices, spare public key(s) may be copied to the respective devices for later use. Therefore, the process of requesting an authentication file and logging in to a device based on the authentication file 28, results in the spare public key(s) being copied to the device. The spare public key(s) may be included in the authentication file 28, and the digital signature (block 404) also digitally signs (e.g., with the current private key) the spare public key(s) so that the authenticity of the spare public key(s) may be checked when the user logs in to a device.

The authentication file 28 may also include a version identification 906 identifying a version of the public key list 902. The version identification 906 may include a version number and/or date used to keep track of the latest version of the public key list 902, as described in more detail with reference to Fig. 10. The public key list 902 may include one or more spare public keys (e.g., PK2) reserved for future use in the two-factor authorization system 10, for example, when a currently used public key (e.g., PK1) expires or if a private key associated with the currently used public key is somehow compromised. The public key list 902 may also include the currently used public key (e.g., PK1). For example, when Alice logs into a medical device, the medical device checks whether the version ID 906 (e.g., date) of the public key list 902 included in Alice's authentication file 28 is newer than the version ID of the public key list stored in the memory of the medical device. If it is indeed newer, the medical device will replace its stored public key list with the list found in Alice's authentication file 28.

The digital signature (block 404) may be generated (e.g., by the server 18 and/or computing device 24) using the currently used private key (e.g., the private key corresponding to PK1) for verification responsively to the currently used public key (e.g., PK1) and digitally sign any one or more of the following: login details (the expiration value (block 400), the username (block 402), the access right(s) (block 408)) and the user revocation list 900 and the public key list 902. Therefore, the mobile storage device 22 which stores the authentication file 28, stores any one or more of the following: the user revocation list 900, the public key list 902, the version identification 904 of the user revocation list 900, and/or the version identification 906 of the public key list 902. The authentication file 28 may be encrypted (block 406).

Reference is now made to Fig. 10, which is a flowchart 1000 including steps in an alternative method of verifying the authentication file 28 to provide access to the computing resources 14 and replace an old user revocation list and/or an old public key list in the system 10 of Fig. 1.

The data interface 30 is configured to connect to the mobile storage device 22 (block 1002), which stores any one or more of the following: the digital signature (block 404 of Fig. 9) (digitally signing any one or more of the following: login details, the user revocation list 900, the version identification 904, the public key list 902 (e.g., including PK2 a spare public key), and/or the version identification 906); the user revocation list 900; the public key list 902; version identification 904; version identification 906; and login details (such as expiration value, username, access rights).

The processing circuitry 34 is optionally configured to receive user input of login data such as the username and PIC (block 1004). The processing circuitry 34 is configured to receive any one or more of the following from the mobile storage device 22: the digital signature (block 404); the user revocation list 900; the public key list 902 (including the spare public key(s), e.g., PK2); the version identification 904; the version identification 906; and optionally login details (block 1006).

The processing circuitry 34 is configured to verify the received digital signature using the current public key (e.g., PK1) responsively to any one or more of the following: the login data (included in the login details of the authentication file 28 or input by the user at the step of block 1004); the user revocation list 900; the public key list 902; version identification 904; version identification 906, to authenticate any one or more of the following: the login data; and the spare public key(s) included in the public key list 902; the user revocation list 900; the version identification 904; and/or the version identification 906 (block 1008). The processing circuitry 34 may be configured to perform other checks described above with reference to Figs. 1-8, for example, to check that the expiration value of the authentication file 28 is still valid (block 1010). The processing circuitry 34 is configured to provide access to one of the computing resources 14 responsively to the authenticated login data (block 1012) and the other checks performed.

In some exemplary modes, the processing circuitry 34 is configured to replace use of an old user revocation list (stored and used by the processing device 16 currently being accessed) with the authenticated user revocation list 900 (stored in the authentication file 28 of the mobile storage device 22) responsively to the version identification 904 of the authenticated user revocation list 900 indicating that the authenticated user revocation list 900 is newer than the old user revocation list (block 1014). In some exemplary modes, the processing circuitry 34 is configured to replace use of an old public key list (stored and used by the processing device 16 currently being accessed) with the new public key list 902 responsively to the version identification 906 of the new public key list 902 indicating that the new public key list 902 is newer than the old public key list. It should be noted that the old user revocation list 900 and/or the old public key list 902 may be deleted or may be stored by the processing devices 16 but not used.

The processing circuitry 34 in the processing device 16 is configured to deny access to the computing resource 14 responsively to the authenticated user revocation list 900 (block 1016). For example, if a user on the user revocation list 900 tries to access the computing resource 14 of the processing device 16 the access will be denied.

The processing circuitry 34 in the processing device 16 is configured to verify additional digital signatures (for example, for different logins to the processing device 16) with the spare public key (e.g., PK2) responsively to the spare public key being authenticated (i.e., when the public key list 902 was authenticated) (block 1018).

Once all unconnected devices 16 learn the new public key(s), new authentication files 28 may be signed with the private key of the new public key. From then on, the public key list 902 stored in the authentication file 28 does not need to include the old public key, and eventually, all the unconnected devices 16 will forget the old public key as the public key list 902 is replaced in those devices 16.

Various features of the disclosure which are, for clarity, described in the contexts of separate exemplary modes may also be provided in combination in a single exemplary mode. Conversely, various features of the disclosure which are, for brevity, described in the context of a single exemplary mode may also be provided separately or in any suitable sub-combination.

The exemplary modes described above are cited by way of example, and the present disclosure is not limited by what has been particularly shown and described hereinabove. Rather the scope of the disclosure includes both combinations and sub-combinations of the various features described hereinabove, as well as variations and modifications thereof which would occur to persons skilled in the art upon reading the foregoing description and which are not disclosed in the prior art. The scope of the invention is defined by the appended claims.

## Claims

1. A method to authenticate users to use an unconnected computing resource (14) of an unconnected processing device (16), wherein the unconnected processing device carries out steps of:
connecting (1002) to a mobile storage device (22), which stores:
a user revocation list (900), and
a digital signature (404) of login details and the user
revocation list, the login details including login data;
receiving (1006) the digital signature and the user revocation list from the mobile storage device;
receiving the login data from the mobile storage device or receiving user input of the login data;
verifying (1008) the digital signature responsively to the user revocation list and the login data to authenticate the user revocation list and the login data;
providing or denying access (812, 1016) to the computing resource responsively to the authenticated login data and the authenticated user revocation list.

2. The method according to claim 1, wherein:
the mobile storage device stores an expiration value;
the login data comprises at least a username and the login details comprise the expiration value;
verifying (1008) the digital signature responsively to the user revocation list and the login data to authenticate the user revocation list and the login data comprises verifying (1008) the digital signature responsively to the expiration value, the user revocation list and the username to authenticate expiration value, the user revocation list and the username;
the method further comprises: receiving the expiration value from the mobile storage device; receiving (504) a user input of a personal identification code; and checking (810) that the expiration value has not expired; and
providing access (812) to the computing resource responsively to the authenticated login data comprises providing access (812) to the computing resource logged in under the username responsively to the expiration value and the username being authenticated, the expiration value having not expired, and the personal identification code.

3. The method according to claim 2, wherein:
the login details include at least one access right (408);
the method further comprises receiving the at least one access right from the mobile storage device;
the verifying includes verifying the digital signature responsively to the expiration value, the username, and the at least one access right to authenticate the expiration value, the username, and the at least one access right;
the checking includes checking the at least one access right to verify whether access to functionality is authorized; and
the providing access includes providing access to the computing resource according to the verified at least one access right.

4. The method according to claim 2 or claim 3, wherein the mobile storage device stores the expiration value in an encrypted form (406), the method further comprising decrypting (508) the expiration value responsively to the personal identification code, optionally wherein the mobile storage device stores the username in an encrypted form (406), the method further comprising decrypting (508) the username responsively to the personal identification code.

5. The method according to any one of claims 2 to 4, wherein the mobile storage device stores the digital signature in an encrypted form (406), the method further comprising decrypting (508) the digital signature responsively to the personal identification code.

6. The method according to any one of claims 2 to 5, further comprising symmetrically decrypting at least one of: the expiration value; the username; and the digital signature responsively to the personal identification code.

7. The method according to any one of claims 2 to 6, wherein the digital signature is generated and verified responsively to a private key and a public key of a public key infrastructure, respectively.

8. The method according to any one of claims 2 to 7, further comprising:
receiving a user input (302) of the username; and
verifying the digital signature responsively to the expiration value, the username, and the personal identification code to authenticate the expiration value, the username, and the personal identification code.

9. The method according to any one of claims 2 to 8, further comprising:
connecting a web server (18) to the mobile storage device;
receiving user input (302, 306) of the username, a password, and the personal identification code by the web server;
generating the expiration value by the web server;
generating the digital signature of the login details; and
storing the expiration value and the digital signature of the login details in the mobile storage device responsively to authenticating the password, optionally further comprising (i) encrypting the expiration value responsively to the personal identification code, wherein the storing comprises storing the encrypted expiration value in the mobile storage device, optionally further comprising encrypting the username responsively to the personal identification code, wherein the storing comprises storing the encrypted username in the mobile storage device, or (ii) encrypting the digital signature responsively to the personal identification code, wherein the storing comprises storing the encrypted digital signature in the mobile storage device.

10. The method according to any one of claims 2 to 9, wherein:
the mobile storage device stores a version identification (904) of the user revocation list, the method further comprising replacing (1014) use of an old user revocation list with the authenticated user revocation list responsively to the version identification of the authenticated user revocation list indicating that the authenticated user revocation list is newer than the old user revocation list.

11. The method according to any one of claims 2 to 10, wherein:
the digital signature is generated and verified responsively to a first private key and a first public key of a public key infrastructure, respectively;
the mobile storage device stores a second public key, and the digital signature digitally signs the login details and the second public key, the method further comprising:
receiving the second public key from the mobile storage device;
verifying the digital signature responsively to the first public key to authenticate the second public key; and
verifying additional digital signatures with the second public key responsively to the second public key being authenticated, optionally wherein:
the mobile storage device stores a new public key list (902) including the first public key and the second public key, and a version identification (906) of the new public key list, the method further comprising replacing (1014) use of an old public key list with the new public key list responsively to the version identification of the new public key list indicating that the new public key list is newer than the old public key list.

12. A system to authenticate users to use an unconnected computing resource (14) of an unconnected processing device (16), comprising:
a data interface (30) configured to connect to a mobile storage device (22), which stores:
a user revocation list (900), and
a digital signature (404) digitally signing login details and the
user revocation list, the login details including login data; and
processing circuitry (34) configured to: receive (1006) the digital signature and the user revocation list from the mobile storage device; receive the login data from the mobile storage device or receive user input of the login data; verify (1008) the digital signature responsively to the user revocation list and the login data to authenticate the user revocation list and the login data; provide access (812) to a computing resource responsively to the authenticated login data; and deny access (1016) to the computing resource responsively to the authenticated user revocation list.

13. The system according to claim 12, wherein
the data interface and the processing circuiting are included by a processing device (24);
the mobile storage device stores an expiration value;
the login data comprises at least a username and the login details comprise the expiration value;
the processing circuitry is configured to:
verify (1008) the digital signature responsively to the expiration value, the user revocation list and the username to authenticate expiration value, the user revocation list and the username;
receive the expiration value from the mobile storage device;
receive (504) a user input of a personal identification code;
check (810) that the expiration value has not expired; and
provide access (812) to the computing resource logged in under the username responsively to the expiration value and the username being authenticated, the expiration value having not expired, and the personal identification code.

14. The system according to claim 13, wherein:
the login details include at least one access right (408); and
the processing circuitry is configured to:
receive the at least one access right from the mobile storage device
verify the digital signature responsively to the expiration value, the username, and the at least one access right to authenticate the expiration value, the username, and the at least one access right;
check the at least one access right to verify whether access to functionality is authorized; and
provide access to the computing resource according to the verified at least one access right.

15. The system according to claim 13 or claim 14, wherein:
the mobile storage device is configured to store the expiration value in an encrypted form (406); and
the processing circuitry is configured to decrypt (508) the expiration value responsively to the personal identification code, optionally wherein:
the mobile storage device is configured to store the username in an encrypted form (406); and
the processing circuitry is configured to decrypt (508) the username responsively to the personal identification code.

16. The system according to any one of claims 13 to 15, wherein:
the mobile storage device is configured to store the digital signature in an encrypted form (406); and
the processing circuitry is configured to decrypt (508) the digital signature responsively to the personal identification code.

17. The system according to any one of claims 13 to 16, wherein the processing circuitry is configured to symmetrically decrypt at least one of: the expiration value; the username; and the digital signature responsively to the personal identification code.

18. The system according to any one of claims 13 to 17, wherein the processing circuitry is configured to verify the digital signature responsively to a public key of a public key infrastructure.

19. The system according to any one of claims 13 to 18, wherein the processing circuitry is configured to:
receive a user input (302) of the username; and
verify the digital signature responsively to the expiration value, the username, and the personal identification code to authenticate the expiration value, the username, and the personal identification code.

20. The system according to any one of claims 13 to 19, further comprising a server (18) configured to:
connect to the mobile storage device;
receive user input (302, 306) of the username, a password, and the personal identification code;
generate the expiration value;
generate the digital signature of the login details; and
store the expiration value and the digital signature of the login details in the mobile storage device responsively to authenticating the password, optionally wherein the server is configured to generate the digital signature responsively to a private key of a public key infrastructure.

21. The system according to claim 20, wherein the server is configured to:
(i) encrypt the expiration value responsively to the personal identification code; and
store the encrypted expiration value in the mobile storage device, optionally wherein the server is configured to:
encrypt the username responsively to the personal identification code; and
store the encrypted username in the mobile storage device, or
(ii) encrypt the digital signature responsively to the personal identification code; and
store the encrypted digital signature in the mobile storage device.

22. The method according to claim 9 or the system according to any one of claims 20 to 21, wherein the login details include the personal identification code.

23. The system according to any one of claims 13 to 22, wherein:
the mobile storage device stores a version identification (904) of the user revocation list; and
the processing circuitry is configured to replace (1014) use of an old user revocation list with the authenticated user revocation list responsively to the version identification of the authenticated user revocation list indicating that the authenticated user revocation list is newer than the old user revocation list.

24. The system according to any one of claims 13 to 23, wherein:
the digital signature is generated and verified responsively to a first private key and a first public key of a public key infrastructure, respectively;
the mobile storage device stores a second public key, and the digital signature digitally signs the login details and the second public key; and
the processing circuitry is configured to:
receive the second public key from the mobile storage device; verify the digital signature responsively to the first public key to authenticate the second public key; and
verify additional digital signatures with the second public key responsively to the second public key being authenticated, optionally wherein:
the mobile storage device stores: a new public key list (902) including the first public key, and the second public key; and a version identification (906) of the new public key list; and
the processing circuitry is configured to replace (1014) use of an old public key list with the new public key list responsively to the version identification of the new public key list indicating that the new public key list is newer than the old public key list.

## Patentansprüche

1. Verfahren zum Authentifizieren von Benutzern zur Verwendung einer nicht verbundenen Computerressource (14) einer nicht verbundenen Verarbeitungsvorrichtung (16), wobei die nicht verbundene Verarbeitungsvorrichtung die folgenden Schritte ausführt:
Verbinden (1002) mit einer mobilen Speichervorrichtung (22), die speichert:
eine Benutzersperrliste (900) und
eine digitale Signatur (404) von Anmeldedetails und der Benutzersperrliste, wobei die Anmeldedetails Anmeldedaten einschließen;
Empfangen (1006) der digitalen Signatur und der Benutzersperrliste von der mobilen Speichervorrichtung;
Empfangen der Anmeldedaten von der mobilen Speichervorrichtung oder Empfangen einer Benutzereingabe der Anmeldedaten;
Verifizieren (1008) der digitalen Signatur als Reaktion darauf, dass die Benutzersperrliste und die Anmeldedaten die Benutzersperrliste und die Anmeldedaten authentifizieren;
Bereitstellen oder Verweigern des Zugriffs (812, 1016) auf die Computerressource als Reaktion auf die authentifizierten Anmeldedaten und die authentifizierte Benutzersperrliste.

2. Verfahren nach Anspruch 1, wobei:
die mobile Speichervorrichtung einen Ablaufwert speichert;
die Anmeldedaten mindestens einen Benutzernamen umfassen und die Anmeldedetails den Ablaufwert umfassen;
wobei das Verifizieren (1008) der digitalen Signatur als Reaktion darauf, dass die Benutzersperrliste und die Anmeldedaten die Benutzersperrliste und die Anmeldedaten authentifizieren, das Verifizieren (1008) der digitalen Signatur als Reaktion darauf, dass der Ablaufwert, die Benutzersperrliste und der Benutzername den Ablaufwert, die Benutzersperrliste und den Benutzernamen authentifizieren, umfasst;
das Verfahren ferner umfasst: Empfangen des Ablaufwerts von der mobilen Speichervorrichtung; Empfangen (504) einer Benutzereingabe eines persönlichen Identifikationscodes; und Prüfen (810), dass der Ablaufwert nicht abgelaufen ist; und
wobei das Bereitstellen des Zugriffs (812) auf die Computerressource als Reaktion auf die authentifizierten Anmeldedaten das Bereitstellen von Zugriff (812) auf die Computerressource, angemeldet unter dem Benutzernamen umfasst, als Reaktion darauf, dass der Ablaufwert und der Benutzernamen authentifiziert sind, der Ablaufwert nicht abgelaufen ist, und der persönlicher Identifikationscode vorliegt.

3. Verfahren nach Anspruch 2, wobei:
die Anmeldedetails mindestens ein Zugriffsrecht (408) einschließen;
das Verfahren ferner das Empfangen des mindestens einen Zugriffsrechts von der mobilen Speichervorrichtung umfasst;
das Verifizieren das Verifizieren der digitalen Signatur als Reaktion darauf einschließt, dass der Ablaufwert, der Benutzername und das mindestens eine Zugriffsrecht den Ablaufwert, den Benutzernamen und das mindestens eine Zugriffsrecht authentifizieren;
das Prüfen das Prüfen des mindestens einen Zugriffsrechts einschließt, um zu verifizieren, ob der Zugriff auf die Funktionalität autorisiert ist; und
das Bereitstellen von Zugriff das Bereitstellen von Zugriff auf die Computerressource gemäß dem verifizierten mindestens einen Zugriffsrecht einschließt.

4. Verfahren nach Anspruch 2 oder 3, wobei die mobile Speichervorrichtung den Ablaufwert in verschlüsselter Form (406) speichert, das Verfahren ferner das Entschlüsseln (508) des Ablaufwerts als Reaktion auf den persönlichen Identifikationscode umfasst, wobei die mobile Speichervorrichtung optional den Benutzernamen in verschlüsselter Form (406) speichert, das Verfahren ferner das Entschlüsseln (508) des Benutzernamens als Reaktion auf den persönlichen Identifikationscode umfasst.

5. Verfahren nach einem der Ansprüche 2 bis 4, wobei die mobile Speichervorrichtung die digitale Signatur in verschlüsselter Form (406) speichert, das Verfahren ferner das Entschlüsseln (508) der digitalen Signatur als Reaktion auf den persönlichen Identifikationscode umfasst.

6. Verfahren nach einem der Ansprüche 2 bis 5, ferner umfassend das symmetrische Entschlüsseln von mindestens einem von dem Ablaufwert; dem Benutzernamen; und der digitalen Signatur als Reaktion auf den persönlichen Identifikationscode.

7. Verfahren nach einem der Ansprüche 2 bis 6, wobei die digitale Signatur als Reaktion auf einen privaten Schlüssel bzw. einen öffentlichen Schlüssel einer Public-Key-Infrastruktur generiert und verifiziert wird.

8. Verfahren nach einem der Ansprüche 2 bis 7, ferner umfassend: Empfangen einer Benutzereingabe (302) des Benutzernamens; und
Verifizieren der digitalen Signatur als Reaktion darauf, dass der Ablaufwert, der Benutzername und der persönliche Identifikationscode den Ablaufwert, den Benutzernamen und den persönlichen Identifikationscode authentifizieren.

9. Verfahren nach einem der Ansprüche 2 bis 8, ferner umfassend: Verbinden eines Webservers (18) mit der mobilen Speichervorrichtung;
Empfangen einer Benutzereingabe (302, 306) des Benutzernamens, eines Passworts und des persönlichen Identifikationscodes durch den Webserver;
Generieren des Ablaufwerts durch den Webserver;
Generieren der digitalen Signatur der Anmeldedetails; und
Speichern des Ablaufwerts und der digitalen Signatur der Anmeldedetails in der mobilen Speichervorrichtung als Reaktion auf das Authentifizieren des Passworts, optional ferner umfassend (i) das Verschlüsseln des Ablaufwerts als Reaktion auf den persönlichen Identifikationscode, wobei das Speichern das Speichern des verschlüsselten Ablaufwerts in der mobilen Speichervorrichtung umfasst, optional ferner umfassend das Verschlüsseln des Benutzernamens als Reaktion auf den persönlichen Identifikationscode, wobei das Speichern das Speichern des verschlüsselten Benutzernamens in der mobilen Speichervorrichtung umfasst, oder (ii) das Verschlüsseln der digitalen Signatur als Reaktion auf den persönlichen Identifikationscode, wobei das Speichern das Speichern der verschlüsselten digitalen Signatur in der mobilen Speichervorrichtung umfasst.

10. Verfahren nach einem der Ansprüche 2 bis 9, wobei:
die mobile Speichervorrichtung eine Versionskennung (904) der Benutzersperrliste speichert, wobei das Verfahren ferner das Ersetzen (1014) der Verwendung einer alten Benutzersperrliste durch die authentifizierte Benutzersperrliste als Reaktion darauf umfasst, dass die Versionskennung der authentifizierten Benutzersperrliste anzeigt, dass die authentifizierte Benutzersperrliste neuer als die alte Benutzersperrliste ist.

11. Verfahren nach einem der Ansprüche 2 bis 10, wobei:
die digitale Signatur als Reaktion auf einen ersten privaten Schlüssel bzw. einen ersten öffentlichen Schlüssel einer Public-Key-Infrastruktur generiert und verifiziert wird;
die mobile Speichervorrichtung einen zweiten öffentlichen Schlüssel speichert und die digitale Signatur die Anmeldedetails und den zweiten öffentlichen Schlüssel digital signiert, wobei das Verfahren ferner umfasst:
Empfangen des zweiten öffentlichen Schlüssels von der mobilen Speichervorrichtung;
Verifizieren der digitalen Signatur als Reaktion darauf, dass der erste öffentliche Schlüssel den zweiten öffentlichen Schlüssel authentifiziert; und
Verifizieren zusätzlicher digitaler Signaturen mit dem zweiten öffentlichen Schlüssel als Reaktion auf die Authentifizierung des zweiten öffentlichen Schlüssels, wobei optional:
die mobile Speichervorrichtung eine neue öffentliche Schlüsselliste (902) speichert, die den ersten öffentlichen Schlüssel und den zweiten öffentlichen Schlüssel einschließt, und eine Versionskennung (906) der neuen öffentlichen Schlüsselliste, wobei das Verfahren ferner das Ersetzen (1014) der Verwendung einer alten öffentlichen Schlüsselliste durch die neue öffentliche Schlüsselliste als Reaktion darauf umfasst, dass die Versionskennung der neuen öffentlichen Schlüsselliste anzeigt, dass die neue öffentliche Schlüsselliste neuer als die alte öffentliche Schlüsselliste ist.

12. System zum Authentifizieren von Benutzern zur Verwendung einer nicht verbundenen Computerressource (14) einer nicht verbundenen Verarbeitungsvorrichtung (16), umfassend:
eine Datenschnittstelle (30), die zum Verbinden mit einer mobilen Speichervorrichtung (22) konfiguriert ist, die Folgendes speichert:
eine Benutzersperrliste (900) und
eine digitale Signatur (404), die die Anmeldedetails und die Benutzersperrliste digital signiert, wobei die Anmeldedetails die Anmeldedaten einschließen; und
Verarbeitungsschaltlogik (34), die konfiguriert ist zum: Empfangen (1006) der digitalen Signatur und der Benutzersperrliste von der mobilen Speichervorrichtung; Empfangen der Anmeldedaten von der mobilen Speichervorrichtung oder Empfangen einer Benutzereingabe der Anmeldedaten; Verifizieren (1008) der digitalen Signatur als Reaktion darauf, dass die Benutzersperrliste und die Anmeldedaten die Benutzersperrliste und die Anmeldedaten authentifizieren; Bereitstellen von Zugriff (812) auf eine Computerressource als Reaktion auf die authentifizierten Anmeldedaten; und Verweigern von Zugriff (1016) auf die Computerressource als Reaktion auf die authentifizierte Benutzersperrliste.

13. System nach Anspruch 12, wobei
die Datenschnittstelle und die Verarbeitungsschaltlogik in einer Verarbeitungsvorrichtung (24) eingeschlossen sind;
die mobile Speichervorrichtung einen Ablaufwert speichert;
die Anmeldedaten mindestens einen Benutzernamen umfassen und die Anmeldedetails den Ablaufwert umfassen;
die Verarbeitungsschaltlogik konfiguriert ist zum:
Verifizieren (1008) der digitalen Signatur als Reaktion darauf, dass der Ablaufwert, die Benutzersperrliste und der Benutzername den Ablaufwert, die Benutzersperrliste und den Benutzernamen authentifizieren;
Empfangen des Ablaufwerts von der mobilen Speichervorrichtung;
Empfangen (504) einer Benutzereingabe eines persönlichen Identifikationscodes;
Prüfen (810), dass der Ablaufwert nicht abgelaufen ist; und
Bereitstellen von Zugriff (812) auf die unter dem Benutzernamen angemeldete Computerressource als Reaktion darauf, dass der Ablaufwert und der Benutzername authentifiziert werden, der Ablaufwert nicht abgelaufen ist, und der persönliche Identifikationscode vorliegt.

14. System nach Anspruch 13, wobei:
die Anmeldedetails mindestens ein Zugriffsrecht (408) einschließen; und
die Verarbeitungsschaltlogik konfiguriert ist zum:
Empfangen des mindestens einen Zugriffsrechts von der mobilen Speichervorrichtung;
Verifizieren der digitalen Signatur als Reaktion darauf, dass der Ablaufwert, der Benutzername und das mindestens eine Zugriffsrecht den Ablaufwert, den Benutzernamen und das mindestens eine Zugriffsrecht authentifizieren;
Prüfen des mindestens einen Zugriffsrechts, um zu verifizieren, ob der Zugriff auf die Funktionalität autorisiert ist; und
Bereitstellen von Zugriff auf die Computerressource gemäß dem verifizierten mindestens einen Zugriffsrecht.

15. System nach Anspruch 13 oder 14, wobei:
die mobile Speichervorrichtung konfiguriert ist, um den Ablaufwert in verschlüsselter Form (406) zu speichern; und
die Verarbeitungsschaltlogik konfiguriert ist, um den Ablaufwert als Reaktion auf den persönlichen Identifikationscode zu entschlüsseln (508), wobei optional:
die mobile Speichervorrichtung konfiguriert ist, um den Benutzernamen in verschlüsselter Form (406) zu speichern; und
die Verarbeitungsschaltlogik konfiguriert ist, um den Benutzernamen als Reaktion auf den persönlichen Identifikationscode zu entschlüsseln (508).

16. System nach einem der Ansprüche 13 bis 15, wobei:
die mobile Speichervorrichtung konfiguriert ist, um die digitale Signatur in verschlüsselter Form zu speichern (406); und
die Verarbeitungsschaltlogik konfiguriert ist, um die digitale Signatur als Reaktion auf den persönlichen Identifikationscode zu entschlüsseln (508).

17. System nach einem der Ansprüche 13 bis 16, wobei die Verarbeitungsschaltlogik konfiguriert ist, um mindestens einen der folgenden Werte symmetrisch zu entschlüsseln: Ablaufwert; den Benutzernamen; und die digitale Signatur als Reaktion auf den persönlichen Identifikationscode.

18. System nach einem der Ansprüche 13 bis 17, wobei die Verarbeitungsschaltlogik konfiguriert ist, um die digitale Signatur als Reaktion auf einen öffentlichen Schlüssel einer Public-Key-Infrastruktur zu verifizieren.

19. System nach einem der Ansprüche 13 bis 18, wobei die Verarbeitungsschaltlogik konfiguriert ist zum:
Empfangen einer Benutzereingabe (302) des Benutzernamens; und
Verifizieren der digitalen Signatur als Reaktion darauf, dass der Ablaufwert, der Benutzername und der persönliche Identifikationscode den Ablaufwert, den Benutzernamen und den persönlichen Identifikationscode authentifizieren.

20. System nach einem der Ansprüche 13 bis 19, das ferner einen Server (18) umfasst, der konfiguriert ist zum:
Herstellen einer Verbindung zu der mobilen Speichervorrichtung;
Empfangen einer Benutzereingabe (302, 306) des Benutzernamens, eines Passworts und des persönlichen Identifikationscodes;
Generieren des Ablaufwerts;
Generieren der digitalen Signatur der Anmeldedetails; und
Speichern des Ablaufwerts und der digitalen Signatur der Anmeldedetails in der mobilen Speichervorrichtung als Reaktion darauf, dass auf die Authentifizierung des Passworts, wobei der Server optional konfiguriert ist, um die digitale Signatur als Reaktion auf einen privaten Schlüssel einer Public-Key-Infrastruktur zu generieren.

21. System nach Anspruch 20, wobei der Server konfiguriert ist zum:
(i) Verschlüsseln des Ablaufwerts als Reaktion auf den persönlichen Identifikationscode; und
Speichern des verschlüsselten Ablaufwerts in der mobilen Speichervorrichtung, wobei der Server optional konfiguriert ist zum:
Verschlüsseln des Benutzernamens als Reaktion auf den persönlichen Identifikationscode; und
Speichern des verschlüsselten Benutzernamens in der mobilen Speichervorrichtung, oder
(ii) Verschlüsseln der digitalen Signatur als Reaktion auf den persönlichen Identifikationscode; und
Speichern der verschlüsselten digitalen Signatur in der mobilen Speichervorrichtung.

22. Verfahren nach Anspruch 9 oder System nach einem der Ansprüche 20 bis 21, wobei die Anmeldedetails den persönlichen Identifikationscode einschließen.

23. System nach einem der Ansprüche 13 bis 22, wobei:
die mobile Speichervorrichtung eine Versionskennung (904) der Benutzersperrliste speichert; und
die Verarbeitungsschaltlogik konfiguriert ist, um die Verwendung einer alten Benutzersperrliste durch die authentifizierte Benutzersperrliste als Reaktion darauf zu ersetzen (1014), dass die Versionskennung der authentifizierten Benutzersperrliste, anzeigt, dass die authentifizierte Benutzersperrliste neuer als die alte Benutzersperrliste ist.

24. System nach einem der Ansprüche 13 bis 23, wobei:
die digitale Signatur als Reaktion auf einen ersten privaten Schlüssel bzw. einen ersten öffentlichen Schlüssel einer Public-Key-Infrastruktur generiert und verifiziert wird;
die mobile Speichervorrichtung einen zweiten öffentlichen Schlüssel speichert, und die digitale Signatur die Anmeldedetails und den zweiten öffentlichen Schlüssel digital signiert; und
die Verarbeitungsschaltlogik konfiguriert ist zum:
Empfangen des zweiten öffentlichen Schlüssels von der mobilen Speichervorrichtung; Verifizieren der digitalen Signatur als Reaktion auf den ersten öffentlichen Schlüssel, um den zweiten öffentlichen Schlüssel zu authentifizieren; und
Verifizieren zusätzlicher digitaler Signaturen mit dem zweiten öffentlichen Schlüssel als Reaktion darauf, dass der zweite öffentliche Schlüssel authentifiziert wird, wobei optional:
die mobile Speichervorrichtung speichert: eine neue öffentliche Schlüsselliste (902), die den ersten öffentlichen Schlüssel und den zweiten öffentlichen Schlüssel einschließt; und eine Versionskennung (906) der neuen öffentlichen Schlüsselliste; und
die Verarbeitungsschaltlogik konfiguriert ist, um die Verwendung einer alten öffentlichen Schlüsselliste durch die neue öffentliche Schlüsselliste als Reaktion darauf zu ersetzen (1014), dass die Versionskennung der neuen öffentlichen Schlüsselliste, anzeigt, dass die neue öffentliche Schlüsselliste neuer als die alte öffentliche Schlüsselliste ist.

## Revendications

1. Procédé permettant d'authentifier des utilisateurs pour l'utilisation d'une ressource informatique (14) non connectée d'un dispositif de traitement (16) non connecté, dans lequel le dispositif de traitement non connecté exécute les étapes consistant à :
se connecter (1002) à un dispositif de stockage mobile (22), lequel stocke :
une liste de révocation d'utilisateurs (900), et
une signature numérique (404) d'informations de connexion et de la liste de révocation d'utilisateurs, les informations de connexion comportant des données de connexion ;
recevoir (1006) la signature numérique et la liste de révocation d'utilisateurs à partir du dispositif de stockage mobile ;
recevoir les données de connexion du dispositif de stockage mobile ou recevoir une entrée utilisateur des données de connexion ;
vérifier (1008) la signature numérique en fonction de la liste de révocation d'utilisateurs et des données de connexion afin d'authentifier la liste de révocation d'utilisateurs et les données de connexion ;
fournir ou refuser l'accès (812, 1016) à la ressource informatique en fonction des données de connexion authentifiées et de la liste de révocation d'utilisateurs authentifiée.

2. Procédé selon la revendication 1, dans lequel :
le dispositif de stockage mobile stocke une valeur d'expiration ;
les données de connexion comprennent au moins un nom d'utilisateur et les informations de connexion comprennent la valeur d'expiration ;
la vérification (1008) de la signature numérique en fonction de la liste de révocation d'utilisateurs et des données de connexion pour authentifier la liste de révocation d'utilisateurs et les données de connexion comprend la vérification (1008) de la signature numérique en fonction de la valeur d'expiration, de la liste de révocation d'utilisateurs et du nom d'utilisateur pour authentifier la valeur d'expiration, la liste de révocation d'utilisateurs et le nom d'utilisateur ;
le procédé comprend en outre : la réception de la valeur d'expiration en provenance du dispositif de stockage mobile ; la réception (504) d'une entrée utilisateur d'un code d'identification personnel ; et la vérification (810) que la valeur d'expiration n'a pas expiré ; et
la fourniture d'un accès (812) à la ressource informatique en fonction des données de connexion authentifiées comprend la fourniture d'un accès (812) à la ressource informatique connectée sous le nom d'utilisateur en fonction de la valeur d'expiration et du nom d'utilisateur en cours d'authentification, de la valeur d'expiration n'ayant pas expiré et du code d'identification personnel.

3. Procédé selon la revendication 2, dans lequel :
les informations de connexion comportent au moins un droit d'accès (408) ;
le procédé comprend en outre la réception de l'au moins un droit d'accès en provenance du dispositif de stockage mobile ;
la vérification comporte la vérification de la signature numérique en fonction de la valeur d'expiration, du nom d'utilisateur et de l'au moins un droit d'accès afin d'authentifier la valeur d'expiration, le nom d'utilisateur et l'au moins un droit d'accès ;
la vérification comporte le la vérification de l'au moins un droit d'accès afin de contrôler si l'accès à la fonctionnalité est autorisé ; et
la fourniture de l'accès comporte la fourniture d'un accès à la ressource informatique en fonction de l'au moins un droit d'accès vérifié.

4. Procédé selon la revendication 2 ou la revendication 3, dans lequel le dispositif de stockage mobile stocke la valeur d'expiration sous une forme cryptée (406), le procédé comprenant en outre le décryptage (508) de la valeur d'expiration en fonction du code d'identification personnel, éventuellement dans lequel le dispositif de stockage mobile stocke le nom d'utilisateur sous une forme cryptée (406), le procédé comprenant en outre le décryptage (508) du nom d'utilisateur en fonction du code d'identification personnel.

5. Procédé selon l'une quelconque des revendications 2 à 4, dans lequel le dispositif de stockage mobile stocke la signature numérique sous une forme cryptée (406), le procédé comprenant en outre le décryptage (508) de la signature numérique en fonction du code d'identification personnel.

6. Procédé selon l'une quelconque des revendications 2 à 5, comprenant en outre le décryptage symétrique d'au moins l'un parmi la valeur d'expiration ; le nom d'utilisateur ; et la signature numérique en fonction du code d'identification personnel.

7. Procédé selon l'une quelconque des revendications 2 à 6, dans lequel la signature numérique est générée et vérifiée en fonction d'une clé privée et d'une clé publique d'une infrastructure à clé publique, respectivement.

8. Procédé selon l'une quelconque des revendications 2 à 7, comprenant en outre : la réception d'une entrée utilisateur (302) du nom d'utilisateur ; et
la vérification de la signature numérique en fonction de la valeur d'expiration, du nom d'utilisateur et du code d'identification personnel afin d'authentifier la valeur d'expiration, le nom d'utilisateur et le code d'identification personnel.

9. Procédé selon l'une quelconque des revendications 2 à 8, comprenant en outre : la connexion d'un serveur Web (18) au dispositif de stockage mobile ;
la réception par le serveur Web d'une entrée utilisateur (302, 306) du nom d'utilisateur, d'un mot de passe et du code d'identification personnel ;
la génération de la valeur d'expiration par le serveur Web ;
la génération de la signature numérique des informations de connexion ; et
le stockage de la valeur d'expiration et de la signature numérique des informations de connexion dans le dispositif de stockage mobile en fonction de l'authentification du mot de passe, comprenant éventuellement en outre (i) le cryptage de la valeur d'expiration en fonction du code d'identification personnel, dans lequel le stockage comprend le stockage de la valeur d'expiration cryptée dans le dispositif de stockage mobile, comprenant éventuellement en outre le cryptage du nom d'utilisateur en fonction du code d'identification personnel, dans lequel le stockage comprend le stockage du nom d'utilisateur crypté dans le dispositif de stockage mobile, ou (ii) le cryptage de la signature numérique en fonction du code d'identification personnel, dans lequel le stockage comprend le stockage de la signature numérique cryptée dans le dispositif de stockage mobile.

10. Procédé selon l'une quelconque des revendications 2 à 9, dans lequel :
le dispositif de stockage mobile stocke une identification de version (904) de la liste de révocation d'utilisateurs, le procédé comprenant en outre le remplacement (1014) de l'utilisation d'une ancienne liste de révocation d'utilisateurs par la liste de révocation d'utilisateurs authentifiée en fonction de l'identification de version de la liste de révocation d'utilisateurs authentifiée indiquant que la liste de révocation d'utilisateurs authentifiée est plus récente que l'ancienne liste de révocation d'utilisateurs.

11. Procédé selon l'une quelconque des revendications 2 à 10, dans lequel :
la signature numérique est générée et vérifiée en fonction d'une première clé privée et d'une première clé publique d'une infrastructure à clé publique, respectivement ;
le dispositif de stockage mobile stocke une seconde clé publique, et la signature numérique signe numériquement les informations de connexion et la seconde clé publique, le procédé comprenant en outre :
la réception de la seconde clé publique en provenance du dispositif de stockage mobile ;
la vérification de la signature numérique en fonction de la première clé publique afin d'authentifier la seconde clé publique ; et
la vérification de signatures numériques supplémentaires à l'aide de la seconde clé publique en fonction de l'authentification de la seconde clé publique, éventuellement dans lequel :
le dispositif de stockage mobile stocke une nouvelle liste de clés publiques (902) comportant la première clé publique et la seconde clé publique, ainsi qu'une identification de version (906) de la nouvelle liste de clés publiques, le procédé comprenant en outre le remplacement (1014) de l'utilisation d'une ancienne liste de clés publiques par la nouvelle liste de clés publiques en fonction de l'identification de version de la nouvelle liste de clés publiques indiquant que la nouvelle liste de clés publiques est plus récente que l'ancienne liste de clés publiques.

12. Système permettant d'authentifier des utilisateurs pour l'utilisation d'une ressource informatique (14) non connectée d'un dispositif de traitement (16) non connecté, comprenant :
une interface de données (30) configurée pour se connecter à un dispositif de stockage mobile (22), qui stocke :
une liste de révocation d'utilisateurs (900), et
une signature numérique (404) signant numériquement des informations de connexion et la liste de révocation d'utilisateurs, les informations de connexion comportant des données de connexion ; et
un ensemble de circuits de traitement (34) configuré pour : recevoir (1006) la signature numérique et la liste de révocation d'utilisateurs en provenance du dispositif de stockage mobile ; recevoir les données de connexion en provenance du dispositif de stockage mobile ou recevoir une entrée utilisateur des données de connexion ; vérifier (1008) la signature numérique en fonction de la liste de révocation d'utilisateurs et des données de connexion afin d'authentifier la liste de révocation d'utilisateurs et les données de connexion ; fournir un accès (812) à une ressource informatique en fonction des données de connexion authentifiées ; et refuser l'accès (1016) à la ressource informatique en fonction de la liste de révocation d'utilisateurs authentifiée.

13. Système selon la revendication 12, dans lequel
l'interface de données et l'ensemble de circuits de traitement sont inclus par un dispositif de traitement (24) ;
le dispositif de stockage mobile stocke une valeur d'expiration ;
les données de connexion comprennent au moins un nom d'utilisateur et les informations de connexion comprennent la valeur d'expiration ;
l'ensemble de circuits de traitement est configuré pour :
vérifier (1008) la signature numérique en fonction de la valeur d'expiration, de la liste de révocation d'utilisateurs et du nom d'utilisateur afin d'authentifier la valeur d'expiration, la liste de révocation d'utilisateurs et le nom d'utilisateur ;
recevoir la valeur d'expiration en provenance du dispositif de stockage mobile ;
recevoir (504) une entrée utilisateur d'un code d'identification personnel ;
vérifier (810) que la valeur d'expiration n'a pas expiré ; et
fournir un accès (812) à la ressource informatique connectée sous le nom d'utilisateur en fonction de la valeur d'expiration et du nom d'utilisateur en cours d'authentification, de la valeur d'expiration n'ayant pas expiré et du code d'identification personnel.

14. Système selon la revendication 13, dans lequel :
les informations de connexion comportent au moins un droit d'accès (408) ; et
l'ensemble de circuits de traitement est configuré pour :
recevoir l'au moins un droit d'accès en provenance du dispositif de stockage mobile
vérifier la signature numérique en fonction de la valeur d'expiration, du nom d'utilisateur et de l'au moins un droit d'accès afin d'authentifier la valeur d'expiration, le nom d'utilisateur et l'au moins un droit d'accès ;
vérifier l'au moins un droit d'accès afin de contrôler si l'accès à la fonctionnalité est autorisé ; et
fournir un accès à la ressource informatique en fonction de l'au moins un droit d'accès vérifié.

15. Système selon la revendication 13 ou la revendication 14, dans lequel :
le dispositif de stockage mobile est configuré pour stocker la valeur d'expiration sous une forme cryptée (406) ; et
l'ensemble de circuits de traitement est configuré pour décrypter (508) la valeur d'expiration en fonction du code d'identification personnel, éventuellement dans lequel :
le dispositif de stockage mobile est configuré pour stocker le nom d'utilisateur sous une forme cryptée (406) ; et
l'ensemble de circuits de traitement est configuré pour décrypter (508) le nom d'utilisateur en fonction du code d'identification personnel.

16. Système selon l'une quelconque des revendications 13 à 15, dans lequel :
le dispositif de stockage mobile est configuré pour stocker la signature numérique sous une forme cryptée (406) ; et
l'ensemble de circuits de traitement est configuré pour décrypter (508) la signature numérique en fonction du code d'identification personnel.

17. Système selon l'une quelconque des revendications 13 à 16, dans lequel l'ensemble de circuits de traitement est configuré pour décrypter symétriquement au moins l'un parmi la valeur d'expiration ; le nom d'utilisateur ; et la signature numérique en fonction du code d'identification personnel.

18. Système selon l'une quelconque des revendications 13 à 17, dans lequel l'ensemble de circuits de traitement est configuré pour vérifier la signature numérique en fonction d'une clé publique d'une infrastructure à clé publique.

19. Système selon l'une quelconque des revendications 13 à 18, dans lequel l'ensemble de circuits de traitement est configuré pour :
recevoir une entrée utilisateur (302) du nom d'utilisateur ; et
vérifier la signature numérique en fonction de la valeur d'expiration, du nom d'utilisateur et du code d'identification personnel afin d'authentifier la valeur d'expiration, le nom d'utilisateur et le code d'identification personnel.

20. Système selon l'une quelconque des revendications 13 à 19, comprenant en outre un serveur (18) configuré pour :
se connecter au dispositif de stockage mobile ;
recevoir une entrée utilisateur (302, 306) du nom d'utilisateur, d'un mot de passe et du code d'identification personnel ;
générer la valeur d'expiration ;
générer la signature numérique des informations de connexion ; et
stocker la valeur d'expiration et la signature numérique des informations de connexion dans le dispositif de stockage mobile en fonction de l'authentification du mot de passe, dans lequel le serveur est éventuellement configuré pour générer la signature numérique en fonction d'une clé privée d'une infrastructure à clé publique.

21. Système selon la revendication 20, dans lequel le serveur est configuré pour :
(i) crypter la valeur d'expiration en fonction du code d'identification personnel ; et
stocker la valeur d'expiration cryptée dans le dispositif de stockage mobile, dans lequel le serveur est éventuellement configuré pour :
crypter le nom d'utilisateur en fonction du code d'identification personnel ; et
stocker le nom d'utilisateur crypté dans le dispositif de stockage mobile, ou
(ii) crypter la signature numérique en fonction du code d'identification personnel ; et
stocker la signature numérique cryptée dans le dispositif de stockage mobile.

22. Procédé selon la revendication 9 ou système selon l'une quelconque des revendications 20 à 21, dans lequel les informations de connexion comportent le code d'identification personnel.

23. Système selon l'une quelconque des revendications 13 à 22, dans lequel :
le dispositif de stockage mobile stocke une identification de version (904) de la liste de révocation d'utilisateurs ; et
l'ensemble de circuits de traitement est configuré pour remplacer (1014) l'utilisation d'une ancienne liste de révocation d'utilisateurs par la liste de révocation d'utilisateurs authentifiée en fonction de l'identification de version de la liste de révocation d'utilisateurs authentifiée indiquant que la liste de révocation d'utilisateurs authentifiée est plus récente que l'ancienne liste de révocation d'utilisateurs.

24. Système selon l'une quelconque des revendications 13 à 23, dans lequel :
la signature numérique est générée et vérifiée en fonction d'une première clé privée et d'une première clé publique d'une infrastructure à clé publique, respectivement ;
le dispositif de stockage mobile stocke une seconde clé publique, et la signature numérique signe numériquement les informations de connexion et la seconde clé publique ; et
l'ensemble de circuits de traitement est configuré pour :
recevoir la seconde clé publique en provenance du dispositif de stockage mobile ; vérifier la signature numérique en fonction de la première clé publique afin d'authentifier la seconde clé publique ; et
vérifier des signatures numériques supplémentaires à l'aide de la seconde clé publique en fonction de l'authentification de la seconde clé publique, éventuellement dans lequel :
le dispositif de stockage mobile stocke : une nouvelle liste de clés publiques (902) comportant la première clé publique et la seconde clé publique ; et une identification de version (906) de la nouvelle liste de clés publiques ; et
l'ensemble de circuits de traitement est configuré pour remplacer (1014) l'utilisation d'une ancienne liste de clés publiques par la nouvelle liste de clés publiques en fonction de l'identification de version de la nouvelle liste de clés publiques indiquant que la nouvelle liste de clés publiques est plus récente que l'ancienne liste de clés publiques.
